# EUROPEAN PATENT APPLICATION

(11) **EP 1 645 759 A1**
(43) Date of publication of application: **12.04.2006**
(21) Application number: 05024838.4
(22) Date of filing: 15.10.2003
(51) Int. Cl.: F16C 11/04, H04M 1/02

(54) **Foldable and rotable portable electronic apparatus**

(30) Priority: 15.10.2002 JP 2002300686; 15.10.2002 JP 2002300687
(62) Divisional of application: 03769902.2
(71) Applicant: Panasonic Mobile Communications Co., Ltd., Yokohama-shi Kanagawa 224-8539 (JP); NTT DoCoMo, Inc., Tokyo 100-6150 (JP)
(72) Inventor: Takamori, Kazuaki, Setagaya-ku Tokyo 155-0033 (JP); Sato, Noriyoshi, Kohoku-ku Yokohama-shi Kanagawa 223-0056 (JP); Sato, Kazunori, Kohoku-ku Yokohama-shi Kanagawa 223-0053 (JP); Sato, Takeshi, Yokohama-shi Kanagawa 240-0007 (JP); Kosugi, Satoshi, Yokohama-shi Kanagawa 224-0006 (JP)
(74) Representative: Grünecker, Kinkeldey, Stockmair & Schwanhäusser Anwaltssozietät

(57) **Abstract**

It is an object of the invention to provide a portable type electronic apparatus including a hinge portion having a rotating function in a plurality of directions, wherein two casings can be held stably without shaking in a state in which they are opened. A portable type electronic apparatus (101) includes a hinge portion (30) for coupling a first casing (10) and a second casing (20) in such a manner that both of the casings can be opened and closed through a first rotating axis (31) and the first casing (10) can be rotated through a second rotating axis (32) in an orthogonal direction to the first rotating axis (31). The hinge portion (30) includes a rotating structure constituting a rotation preventing unit and has such a structure that the first casing (10) and the second casing (20) can be opened and closed with a rotation around the first rotating axis (31), the first casing (10) can be rotated around the second rotating axis (32) in a state in which the first casing (10) and the second casing (20) are opened within a predetermined angle range, and furthermore, the rotation of the first casing (10) around the second rotating axis (32) is prevented in an opening state beyond the predetermined angle range, and the casings can be thus prevented from shaking.

## Description

### <Technical Field>

The present invention relates to a portable type electronic apparatus in which two casings are coupled to each other through a hinge portion and are thus rotatable, and more particularly to a portable type electronic apparatus having a rotating function in a plurality of directions.

### <Background Art>

In recent years, in a portable type electronic apparatus, a reduction in a size has progressed as is represented by a cell phone. On the other hand, various functions such as a television telephone function, a digital camera function and a digital video camera function have been loaded. By loading a plurality of functions together on a portable type electronic apparatus, it is possible to simultaneously eliminate the necessity of carrying a plurality of portable type electronic apparatuses, thereby increasing a convenience. As a result, the number of users to carry the portable type electronic apparatus has been increased.

A conventional portable type electronic apparatus of an opening and closing type has had a structure in which a first casing and a second casing are only opened and closed through a hinge portion. There has been proposed a technique in which a hinge portion has such a structure as to be rotated through a second rotating axis and the display surface of a first casing can also be rotated in an orthogonal direction to the operating surface of a second casing through the hinge portion in order to enhance an operability in the case in which a plurality of functions such as a call function through a radio communication line, a television telephone function, a digital camera function and a digital video camera function is loaded together on the portable type electronic apparatus (for example, see Patent Documents 1 and 2).

### (Patent Document 1)

JP-A-2001-169166

### (Patent Document 2)

JP-A-11-30226

In the conventional portable type electronic apparatus having a rotating function in a plurality of directions as described above, however, when a user holds the second casing by hand and presses the first casing having a receiving portion against his (her) ear in the execution of a call through a radio communication line by using a telephone function, the casing is easily rotated by the rotating structure of the hinge portion. There is a problem in that the first casing is shaken in this state and the receiving portion thus gets away from the ear, causing the difficulty of a call.

In a conventional portable terminal device having the rotating function in a plurality of directions as described above, moreover, there is a possibility that an antenna might hit against a first casing when the first casing is rotated, resulting in the damage of the antenna or the first casing in the case in which the antenna is provided with a protrusion from the second casing in order to fulfill the radio communicating function. In the case in which an image pickup unit or a light emitting unit is connected through a connector for connecting an external unit provided in the casing, furthermore, there is a problem in that the image pickup unit or the light emitting unit which is attached to the casing might hit against the antenna when the first casing is rotated, resulting in the damage of the antenna, the first casing, the image pickup unit or the light emitting unit.

The invention has been made in order to solve the problems and has an object to provide a portable type electronic apparatus comprising a hinge portion having a rotating function in a plurality of directions which can stably hold two casings in an opening state without shaking when one of the casings is pressed against an ear in a communication through a telephone function, and can enhance a handling property in use.

Moreover, the invention has been made in order to solve the problems and has an object to provide a portable terminal device comprising a hinge portion having a rotating function in a plurality of directions in which when there is a member provided or attached with a protrusion toward the outside of a casing such as an antenna for a radio communicating function and an image pickup unit or a light emitting unit for a camera function, these members and casings can be prevented from being damaged by the rotation of the casing, a user can carry out a manipulation without anxiety and a handling property in use can be enhanced.

### <Disclosure of the Invention>

The invention provides a portable type electronic apparatus including a first casing having a display portion, a second casing having an operating portion, and a hinge portion for rotatably coupling the first casing to the second casing, wherein the hinge portion includes a rotation preventing unit having a first rotating axis to be an axis in a rotation from a state in which the first casing and the second casing are opened to a state in which they are closed to be opposed to each other, and a second rotating axis to be an axis in a rotation of either the first casing or the second casing in an orthogonal direction to a rotating direction of the first rotating axis in a state in which the first casing and the second casing are opened within a predetermined angle range around the first rotating axis, and serving to prevent a rotation of the first casing or the second casing around the second rotating axis in a state in which the first casing and the second casing are opened beyond the predetermined angle range.

According to this structure, the first casing and the second casing are not rotated around the second rotating axis in the state in which the first casing and the second casing are opened beyond the predetermined angle range. Therefore, it is possible to provide a portable type electronic apparatus capable of stably holding the two casings in an opening state without shaking.

Moreover, the invention provides the portable type electronic apparatus, further comprising a call unit for implementing a call function through a radio communication line, a receiver for outputting and receiving a call voice from the call unit being provided in the first casing, a microphone for inputting and transmitting the call voice to the call unit being provided in the second casing or the first casing, and the call unit functioning when the first casing and the second casing are opened with the receiver and the microphone turned in almost identical directions to each other.

According to this structure, it is possible to provide the portable type electronic apparatus in which the casings are stably held without shaking and a transmission/receipt can be carried out in an excellent use condition also in the state in which a user opens the first casing and the second casing at a predetermined angle or more during a call and holds the second casing with the first casing pressed against his (her) ear.

Furthermore, the invention provides the portable type electronic apparatus, wherein a first image pickup portion accommodating a first image pickup element is provided on a display surface side of a display portion of the first casing, and the display portion has a function of displaying an image picked up by the first image pickup portion.

According to this structure, in the case in which the display portion of the cell phone displays a transversely long image picked up by the first image pickup portion on a vertically long screen in normal use, for example, an angle formed by the first casing and the second casing is set to be approximately 90 degrees with a rotation around the first rotating axis and the display screen of the display portion is placed into a transversely long position to change over the image display to be transversely long. Consequently, it is possible to provide, to a user, a display which can easily be seen. In the case in which the first casing and the second casing are opened at a predetermined angle or more to carry out a call, moreover, a rotation around the second rotating axis can be prevented by the rotation preventing unit of the hinge portion. Consequently, the casing can be stably held without shaking and the transmission/receipt can be carried out in an excellent use condition.

Moreover, the invention provides the portable type electronic apparatus, wherein a second image pickup portion accommodating a second image pickup element is provided in an opposite direction to the first image pickup portion in the first casing, and the display portion has a function of displaying images picked up by the first image pickup portion and the second image pickup portion.

According to this structure, in the case in which the display portion of the cell phone displays a transversely long image picked up by the first image pickup portion on a vertically long screen in normal use, the case in which an image picked up by the second image pickup portion by using the display portion as a monitor is displayed and a user carries out photographing while seeing the image or the case in which images picked up by the first image pickup portion and the second image pickup portion by using the display portion as the monitor are displayed at the same time and the user carries out the photographing while seeing the images, for example, an angle formed by the first casing and the second casing is set to be approximately 90 degrees with a rotation around the first rotating axis. Consequently, it is possible to provide, to a user, a display which can easily be seen. By picking up an image on the opposite side of the display portion by the second image pickup portion, furthermore, it is possible to pick up an image while confirming the photographed image by utilizing the display screen of the display portion as the monitor like the finder of a camera.

In addition, the invention provides the portable type electronic apparatus, wherein a second image pickup portion accommodating a second image pickup element is provided in a direction of the first rotating axis in the hinge portion, and the display portion has a function of displaying images picked up by the first image pickup portion and the second image pickup portion.

According to this structure, in the case in which the display portion of the cell phone displays a transversely long image picked up by the first image pickup portion on a vertically long screen in normal use, the case in which an image picked up by the second image pickup portion by using the display portion as a monitor is displayed and a user carries out photographing while seeing the image or the case in which images picked up by the first image pickup portion and the second image pickup portion by using the display portion as the monitor are displayed at the same time and the user carries out the photographing while seeing the images, for example, an angle formed by the first casing and the second casing is set to be approximately 90 degrees with a rotation around the first rotating axis. Consequently, it is possible to provide, to a user, a display which can easily be seen. By picking up an image in an opposite direction to the display portion in the direction of the first rotating axis by the second image pickup portion, furthermore, it is possible to pick up an image while confirming the photographed image by utilizing the display screen of the display portion as the monitor like the finder of a camera.

The invention provides a portable terminal device including a first casing having a display portion, a second casing having an operating portion, and a hinge portion for rotatably coupling the first casing to the second casing, an antenna being provided with a protrusion in the vicinity of the hinge portion, wherein the hinge portion includes a rotation preventing unit having a first rotating axis to be an axis in a rotation from a state in which the first casing and the second casing are opened to a state in which they are closed to be opposed to each other, and a second rotating axis to be an axis in a rotation of either the first casing or the second casing in an orthogonal direction to a rotating direction of the first rotating axis in a state in which the first casing and the second casing are opened within a predetermined angle range around the first rotating axis, and serving to prevent a rotation of the first casing or the second casing around the second rotating axis in a state in which the first casing and the second casing are opened beyond the predetermined angle range.

According to this structure, the first casing and the second casing are not rotated around the second rotating axis in the state in which the first casing and the second casing are opened beyond the predetermined angle range. Therefore, it is possible to provide a portable terminal device in which the first casing and the second casing can be prevented from hitting against the antenna protruded from the casing, the antenna or the casing can be prevented from being damaged and a user can thus carry out a manipulation without anxiety, and a transmission/receipt can be performed in an excellent use condition.

Moreover, the invention provides the portable terminal device, further comprising a call unit for transmitting and receiving a communication signal through the antenna to implement a call function through a radio communication line, a receiver for outputting and receiving a call voice from the call unit being provided in the first casing, a microphone for inputting and transmitting the call voice to the call unit being provided in the second casing or the first casing, and the call unit functioning when the first casing and the second casing are opened with the receiver and the microphone turned in almost identical directions to each other.

According to this structure, in the state in which the user opens the first casing and the second casing at a predetermined angle or more during a call, the first casing and the second casing are not rotated around the second rotating axis and the first casing and the second casing can be prevented from hitting against the antenna protruded from the casing. Therefore, it is possible to provide a portable terminal device in which the user can carry out a manipulation to give a call without anxiety in a state in which there is no possibility of a breakage.

Furthermore, the invention provides the portable terminal device, wherein a first image pickup portion accommodating a first image pickup element is provided on a display surface side of a display portion of the first casing, and the display portion has a function of displaying an image picked up by the first image pickup portion.

According to this structure, in the case in which the display portion of the cell phone displays a transversely long image picked up by the first image pickup portion on a vertically long screen in normal use, for example, an angle formed by the first casing and the second casing is set to be approximately 90 degrees with a rotation around the first rotating axis and the display screen of the display portion is placed into a transversely long position to change over the image display to be transversely long. Consequently, it is possible to provide, to a user, a display which can easily be seen. In the case in which the first casing and the second casing are opened at a predetermined angle or more to carry out a call, moreover, a rotation around the second rotating axis can be prevented by the rotation preventing unit of the hinge portion. Consequently, it is possible to prevent the first casing and the second casing from hitting against the antenna protruded from the casing to damage the antenna or the casing. Thus, the user can carry out a manipulation without anxiety in a state in which there is no possibility of a breakage, thereby performing a transmission/receipt in an excellent use condition.

In addition, the invention provides the portable terminal device,
wherein a second image pickup portion accommodating a second image pickup element is provided in an opposite direction to the first image pickup portion in the first casing, and the display portion has a function of displaying images picked up by the first image pickup portion and the second image pickup portion.

According to this structure, in the case in which the display portion of the cell phone displays a transversely long image picked up by the first image pickup portion on a vertically long screen in normal use, the case in which an image picked up by the second image pickup portion by using the display portion as a monitor is displayed and a user carries out photographing while seeing the image or the case in which images picked up by the first image pickup portion and the second image pickup portion are displayed by using the display portion as the monitor at the same time and the user carries out the photographing while seeing the images, for example, an angle formed by the first casing and the second casing is set to be approximately 90 degrees with a rotation around the first rotating axis. Consequently, it is possible to provide, to a user, a display which can easily be seen. By picking up an image on the opposite side of the display portion by the second image pickup portion, furthermore, it is possible to pick up an image while confirming the photographed image by utilizing the display screen of the display portion as the monitor like the finder of a camera.

Moreover, the invention provides the portable terminal device, wherein a second image pickup portion accommodating a second image pickup element is provided in a direction of the first rotating axis in the hinge portion, and the display portion has a function of displaying images picked up by the first image pickup portion and the second image pickup portion.

According to this structure, in the case in which the display portion of the cell phone displays a transversely long image picked up by the first image pickup portion on a vertically long screen in normal use, the case in which an image picked up by the second image pickup portion by using the display portion as a monitor is displayed and a user carries out photographing while seeing the image or the case in which images picked up by the first image pickup portion and the second image pickup portion by using the display portion as the monitor are displayed at the same time and the user carries out the photographing while seeing the images, for example, an angle formed by the first casing and the second casing is set to be approximately 90 degrees with a rotation around the first rotating axis. Consequently, it is possible to provide, to a user, a display which can easily be seen. By picking up an image in an opposite direction to the display portion in the direction of the first rotating axis by the second image pickup portion, furthermore, it is possible to pick up an image while confirming the photographed image by utilizing the display screen of the display portion as the monitor like the finder of a camera.

Furthermore, the invention provides the portable terminal device, wherein the first casing has a connector for connecting an external unit and is constituted to be connectable to the connector in a state in which an image pickup unit accommodating an image pickup element is protruded from the first casing.

According to this structure, the first casing and the second casing are not rotated around the second rotating axis in the state in which the first casing and the second casing are opened beyond a predetermined angle range. Therefore, it is possible to provide a portable terminal device in which the first casing, the second casing and the image pickup unit can be prevented from hitting against the antenna protruded from the casing and a user can thus carry out a manipulation without anxiety to give a call in a state in which there is no possibility that the image pickup unit might be broken.

In addition, the invention provides the portable terminal device,
wherein the first casing has a connector for connecting an external unit and is constituted to be connectable to the connector in a state in which a light emitting unit accommodating a light emitting element is protruded from the first casing.

According to this structure, the first casing and the second casing are not rotated around the second rotating axis in the state in which the first casing and the second casing are opened beyond a predetermined angle range. Therefore, it is possible to provide a portable terminal device in which the first casing, the second casing and the light emitting unit can be prevented from hitting against the antenna protruded from the casing and a user can thus carry out a manipulation without anxiety to give a call in a state in which there is no possibility that the light emitting unit might be broken.

### <Brief Description of the Drawings>

Fig. 1 is a perspective view showing the external structure of a portable type electronic apparatus according to a first embodiment of the invention,
Fig. 2 is a perspective view showing a state in which a casing is closed in the portable type electronic apparatus according to the first embodiment,
Fig. 3 is a perspective view showing a state in which a first casing is rotated around a second rotating axis in the portable type electronic apparatus according to the first embodiment,
Fig. 4 is a perspective view showing a structure in the first state of a rotating structure provided in a hinge portion in the portable type electronic apparatus according to the embodiment,
Fig. 5 is a plan view showing an enlarged main part in the first state of the rotating structure according to the embodiment as seen in the direction of the second rotating axis, Fig. 6 is a perspective view showing a structure in the second state of the rotating structure provided in the hinge portion in the portable type electronic apparatus according to the embodiment,
Fig. 7 is a plan view showing an enlarged main part in the second state of the rotating structure according to the embodiment as seen in the direction of the second rotating axis,
Fig. 8 is a plan view showing a first variant of the rotating structure according to the embodiment,
Fig. 9 is a plan view showing a second variant of the rotating structure according to the embodiment,
Fig. 10 is a perspective view showing the external structure of a portable type electronic apparatus according to a second embodiment of the invention,
Fig. 11 is a plan view showing a structure in the case in which a first casing is rotated around a second rotating axis to set an angle formed by the first casing and a second casing to be approximately 90 degrees in the portable type electronic apparatus according to the first embodiment illustrated in Fig. 1 or the second embodiment illustrated in Fig. 10,
Fig. 12 is a perspective view showing the external structure of a portable type electronic apparatus according to a third embodiment of the invention,
Fig. 13 is a perspective view showing the external structure of a portable type electronic apparatus according to a fourth embodiment of the invention,
Fig. 14 is a perspective view showing the external structure of a portable type electronic apparatus according to a fifth embodiment of the invention,
Fig. 15 is a perspective view showing the external structure of a portable type electronic apparatus according to a sixth embodiment of the invention,
Fig. 16 is a perspective view showing the external structure of a portable terminal device according to a seventh embodiment of the invention,
Fig. 17 is a perspective view showing a state in which a casing is closed in the portable type terminal device according to the seventh embodiment,
Fig. 18 is a perspective view showing a state in which a first casing is rotated around a second rotating axis in the portable type terminal device according to the seventh embodiment,
Fig. 19 is a perspective view showing a structure in the first state of a rotating structure provided in a hinge portion in the portable terminal device according to the embodiment,
Fig. 20 is a plan view showing an enlarged main part in the first state of the rotating structure according to the embodiment as seen in the direction of the second rotating axis,
Fig. 21 is a perspective view showing a structure in the second state of the rotating structure provided in the hinge portion in the portable terminal device according to the embodiment,
Fig. 22 is a plan view showing an enlarged main part in the second state of the rotating structure according to the embodiment as seen in the direction of the second rotating axis,
Fig. 23 is a plan view showing a first variant of the rotating structure according to the embodiment,
Fig. 24 is a plan view showing a second variant of the rotating structure according to the embodiment,
Fig. 25 is a perspective view showing the external structure of a portable terminal device according to an eighth embodiment of the invention,
Fig. 26 is a plan view showing a structure in the case in which a first casing is rotated around a second rotating axis to set an angle formed by the first casing and a second casing to be approximately 90 degrees in the variant of the portable terminal device according to the seventh embodiment illustrated in Fig. 16,
Fig. 27 is a perspective view showing the external structure of a portable terminal device according to a ninth embodiment of the invention,
Fig. 28 is a perspective view showing the external structure of a portable terminal device according to a tenth embodiment of the invention,
Fig. 29 is a perspective view showing the external structure of a portable terminal device according to an eleventh embodiment of the invention,
Fig. 30 is a perspective view showing the external structure of a portable terminal device according to a twelfth embodiment of the invention,
Fig. 31 is a perspective view showing the external structure of a portable terminal device according to a thirteenth embodiment of the invention, and
Fig. 32 is a perspective view showing the external structure of a portable terminal device according to a fourteenth embodiment of the invention.

In the drawings, 101 denotes a portable type electronic apparatus, 102 denotes a portable terminal device, 2 denotes a rotating structure, 10 denotes a first casing, 11 denotes a display portion, 12 denotes a first image pickup portion, 13 denotes a receiver, 14 and 22 denote a microphone, 15 and 24 denote a second image pickup portion, 16 denotes an external unit connector, 20 denotes a second casing, 21 denotes an operating portion, 23 denotes a second image pickup portion operating key, 25 denotes an antenna, 30 denotes a hinge portion, 31 denotes a first rotating axis, 32 denotes a second rotating axis, 33 denotes a first rotating shaft portion, 34 denotes a first rotating shaft holder A, 35 denotes a first rotating shaft holder B, 36 denotes a second rotating shaft portion, 37 denotes a rotation regulating plate, 38 denotes a holding plate, 39 denotes a first casing attaching plate, 40 denotes a second casing attaching plate A, 41 denotes a second casing attaching plate B, 42 denotes a first rotating shaft snap ring, 51 denotes an image pickup unit, and 52 denotes a light emitting unit.

### <Best Mode for Carrying Out the Invention>

Embodiments of the invention will be described below with reference to the drawings.

### (First Embodiment)

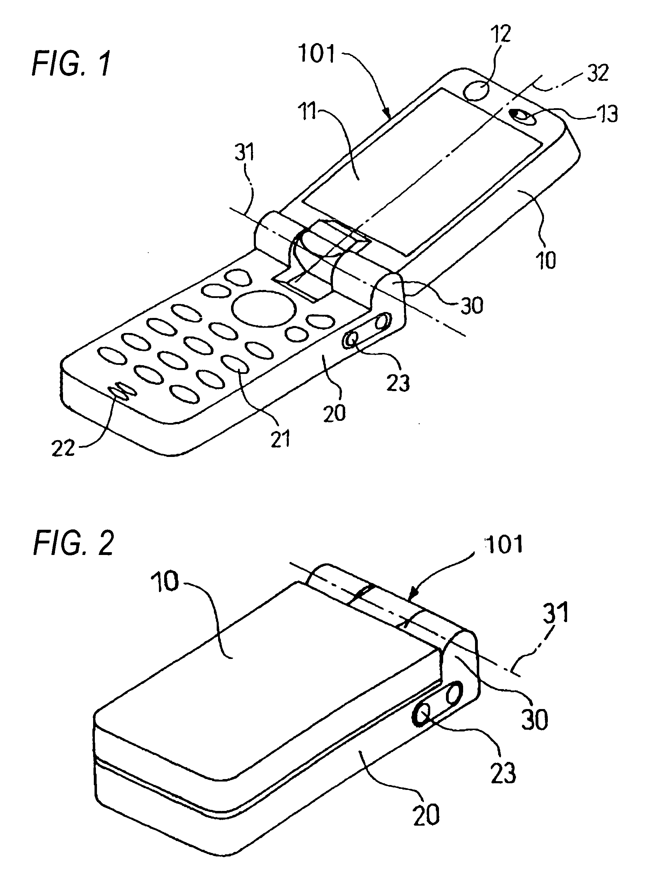

Fig. 1 is a perspective view showing the external structure of a portable type electronic apparatus according to a first embodiment of the invention. Fig. 1 shows a state (a second opening state) in which a first casing 10 is rotated and opened around a first rotating axis 31 in a portable type electronic apparatus 101 according to the first embodiment.

The portable type electronic apparatus 101 includes the first casing 10 having a display portion 11 and a second casing 20 having an operating portion 21, and includes a hinge portion 30 for coupling the first casing 10 to the second casing 20 in such a manner that the first casing 10 and the second casing 20 can be opened and closed through the first rotating axis 31 and the first casing 10 can be rotated around a second rotating axis 32 in an orthogonal direction to the first rotating axis 31.

The first casing 10 of the portable type electronic apparatus 101 is provided with the display portion 11 for carrying out various displays, a first image pickup portion 12 accommodating a first image pickup unit for picking up the image of the forward part of the display portion 11 and a receiver 13 for outputting and receiving a call voice in a main surface portion exposed when the casing 10 is opened. The second casing 20 is provided with the operating portion 21 formed by a plurality of operating keys and a microphone 22 for inputting and transmitting a call voice in the main surface portion, and a second image pickup portion operating key 23 for operating a second image pickup portion (not shown) accommodating a second image pickup unit in the first casing 10 or the second casing 20 in a side surface portion. In the first embodiment, the hinge portion 30 is provided on a base end at the second casing 20 side and is coupled to the first casing 10, and the first rotating axis 31 is formed in the longitudinal direction of the hinge portion 30 and the second rotating axis 32 is formed in an orthogonal direction to the first rotating axis 31 in the central part of the first casing 10.

In Fig. 1, the first casing 10 and the second casing 20 are rotated and opened around the first rotating axis 31 in such a manner that the receiver 13 and the microphone 22 are faced in almost identical directions. Moreover, the portable type electronic apparatus 101 has a call unit such as a radio communicating portion capable of executing a call function through a radio communication line and a voice signal processing portion. The second image pickup portion operating key 23 may be usable as the image pickup portion operating key of the first image pickup portion 12 in the case in which the second image pickup portion is not provided.

In the embodiment, there is provided a rotation preventing unit for preventing a rotation around the second rotating axis 32 in a state in which the first casing 10 and the second casing 20 are rotated around the first rotating axis 31 and the first casing 10 is opened beyond a predetermined angle range (for example, 120 degrees or more) as shown in Fig. 1. The rotation preventing unit will be described below in detail. By this structure, in the case in which the first casing 10 and the second casing 20 are opened as shown in Fig. 1 when a user gives a call through the radio communication line by using a telephone function, for example, the first casing 10 is not rotated even if the user holds the second casing 20 by hand and presses the first casing 10 against his (her) ear. Therefore, the casing can be stably held without shaking so that a transmission/receipt can be carried out in an excellent use condition.

Fig. 2 is a perspective view showing a state in which the casing is closed in the portable type electronic apparatus 101 according to the first embodiment. In this case, the first casing 10 and the second casing 20 are rotated around the first rotating axis 31 in the hinge portion 30, and the first casing 10 and the second casing 20 are opposed to each other and are closed in such a manner that the main surface portions of both of the casings face and overlap each other.

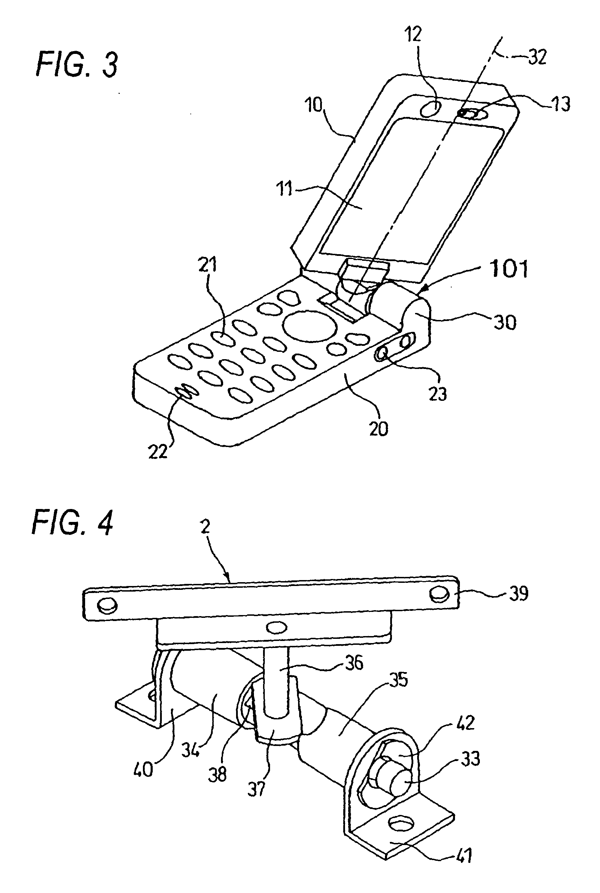

Fig. 3 is a perspective view showing a state (a first opening state) in which the first casing 10 is rotated around the second rotating axis 32 in the portable type electronic apparatus 101 according to the first embodiment. In this case, the first casing 10 is rotatable around the second rotating axis 32 in a state in which the first casing 10 and the second casing 20 are rotated and opened around the first rotating axis 31 within a predetermined angle range. Consequently, in the case in which the display portion 11 in a cell phone displays a transversely long image picked up by the first image pickup portion 12 on a vertically long display screen in normal use, for example, the first casing 10 can be rotated to bring the display screen into a transversely long state. More specifically, by rotating the first casing 10 around the second rotating axis 32 to set the angle formed by the first casing 10 and the second casing 20 to be approximately 90 degrees and placing the display screen of the display portion 11 in a transversely long position to change over the image display to be transversely long, it is possible to provide a display which can easily be seen by a user.

Next, the structure of the hinge portion 30 according to the embodiment will be described in detail. Fig. 4 is a perspective view showing a structure in the first state of a rotating structure 2 provided in the hinge portion 30 in the portable type electronic apparatus 101 according to the embodiment. Fig. 4 shows, as the first state of the rotating structure 2, a state in which a rotation is carried out around the second rotating axis 32 with the first casing 10 and the second casing 20 opened around the first rotating axis 31 at a predetermined angle. The rotation preventing unit is constituted in the rotating structure 2.

The rotating structure 2 has a first rotating shaft portion 33 to be the center of the rotation of the first rotating axis 31, and a first rotating shaft holder A 34 and a first rotating shaft holder B 35 which serve to hold and fix the first rotating shaft portion 33 and take cylindrical shapes. Moreover, the rotating structure 2 has a second rotating shaft portion 36 to be the center of the rotation of the second rotating axis 32, and an elliptical plate-shaped rotation regulating plate 37 coupled to the second rotating shaft portion 36. The rotation regulating plate 37 has the function of being rotated around the first rotating axis 31 together with the second rotating shaft portion 36, and furthermore, being rotated interlockingly with the second rotating shaft portion 36 and preventing the rotation of the second rotating shaft portion 36 around the second rotating axis 32 in a state in which the first casing 10 and the second casing 20 are opened beyond a predetermined angle range.

Moreover, there are provided a holding plate 38 for holding and fixing the first rotating shaft portion 33 and the second rotating shaft portion 36, a first casing attaching plate 39 for attaching and fixing the tip portion of the second rotating shaft portion 36 to the first casing 10, and a second casing attaching plate A 40 and a second casing attaching plate B 41 which serve to attach and fix both ends of the first rotating shaft portion 33 to the second casing 20 respectively. Furthermore, a first rotating shaft snap ring 42 for holding and fixing the first rotating shaft portion 33 to the second casing attaching plate A 40 and the second casing attaching plate B 41 is attached to the second casing attaching plate A 40 and the second casing attaching plate B 41, respectively.

The first rotating shaft portion 33 has both ends held and fixed to the second casing attaching plate A 40 and the second casing attaching plate B 41 in a state in which the shaft is prevented from coming off by the first rotating shaft snap ring 42. Consequently, the first rotating shaft portion 33 is rotatable around the first rotating axis 31 with respect to the second casing attaching plate A 40 and the second casing attaching plate B 41.

The rotation regulating plate 37 and the first casing attaching plate 39 are fixed by caulking so that the base end of the second rotating shaft portion 36 is held and fixed rotatably with respect to the first rotating shaft portion 33 through the holding plate 38. Consequently, the second rotating shaft portion 36 is rotated around the first rotating axis 31, and furthermore, is rotatable around the second rotating axis 32.

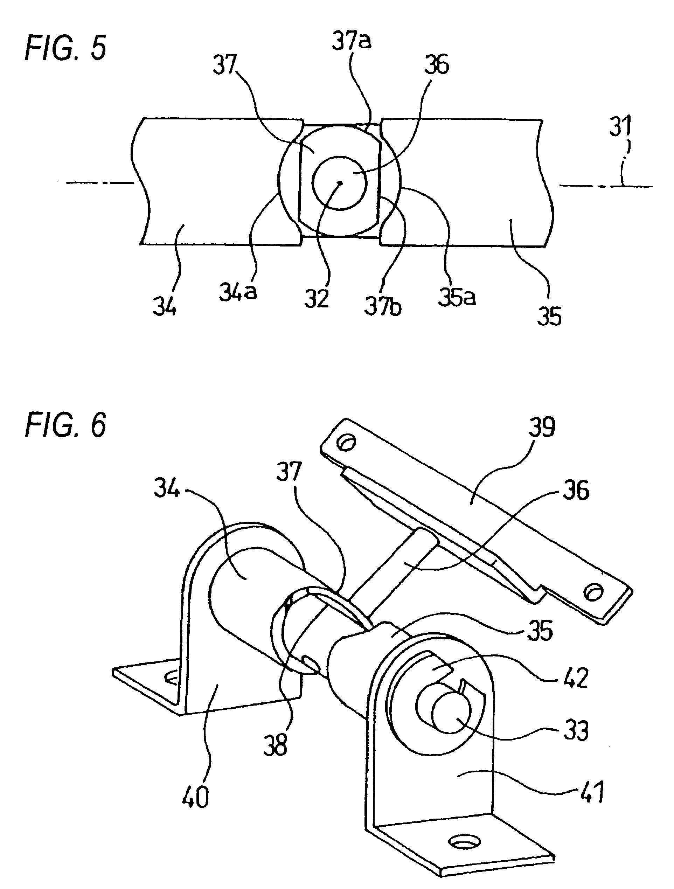

Fig. 5 is a plan view showing an enlarged main part in the first state of the rotating structure 2 according to the embodiment, illustrating the enlarged structures of the second rotating shaft portion 36, the rotation regulating plate 37, the first rotating shaft holder A 34 and the first rotating shaft holder B 35 seen in the direction of the second rotating axis 32 in the first state of the rotating structure 2 shown in Fig. 4.

The rotation regulating plate 37 has a circular arc portion 37a taking an external shape on a circumference to be a concentric circle with the second rotating shaft portion 36 and chord portions 37b provided at an equal distance from the axis 32 in parallel to each other with the second rotating axis 32 to be the center of the second rotating shaft portion 36 interposed therebetween, and is constituted by an elliptical plate member obtained by cutting a disc out in a parallel line.

The first rotating shaft holder A 34 and the first rotating shaft holder B 35 are provided opposite to each other at a predetermined interval with the second rotating shaft portion 36 interposed therebetween in such a manner that the second rotating shaft portion 36 is rotatable around the first rotating axis 31. Arcuate notch portions 34a and 35a are formed on ends at the second rotating shaft portion 36 side in the first rotating shaft holder A 34 and the first rotating shaft holder B 35. The notch portions 34a and 35a take external shapes on a slightly larger circumference than the circular arc portion 37a of the rotation regulating plate 37 when they are concentric with the second rotating shaft portion 36.

The rotation regulating plate 37 is fixed to the second rotating shaft portion 36. When the second rotating shaft portion 36 is rotated so that the first casing 10 is rotated around the second rotating axis 32, therefore, the rotation regulating plate 37 is rotated together with the second rotating shaft portion 36 interlockingly with the rotation. At this time, the notch portions 34a and 35a of the first rotating shaft holder A 34 and the first rotating shaft holder B 35 are larger than the circular arc portion 37a of the rotation regulating plate 37. For this reason, the rotation regulating plate 37 can be prevented from hitting against the first rotating shaft holder A 34 and the first rotating shaft holder B 35 to regulate the rotation in the state shown in Fig. 5. In this case, accordingly, the second rotating shaft portion 36 can be rotated freely, and the first casing attaching plate 39 is rotated so that the first casing 10 can be rotated around the second rotating axis 32.

Fig. 6 is a perspective view showing a structure in the second state of the rotating structure 2 according to the embodiment. Fig. 6 shows, as the second state of the rotating structure 2, a state in which a rotation around the second rotating axis 32 is regulated in such a condition that the first casing 10 and the second casing 20 in the portable type electronic apparatus 101 are opened around the first rotating axis 31 beyond a predetermined angle range as shown in Fig. 1. In this case, the second rotating shaft portion 36 is further rotated around the first rotating axis 31 in the state shown in Fig. 4 and is inclined with respect to the second casing attaching plate A 40 and the second casing attaching plate B 41.

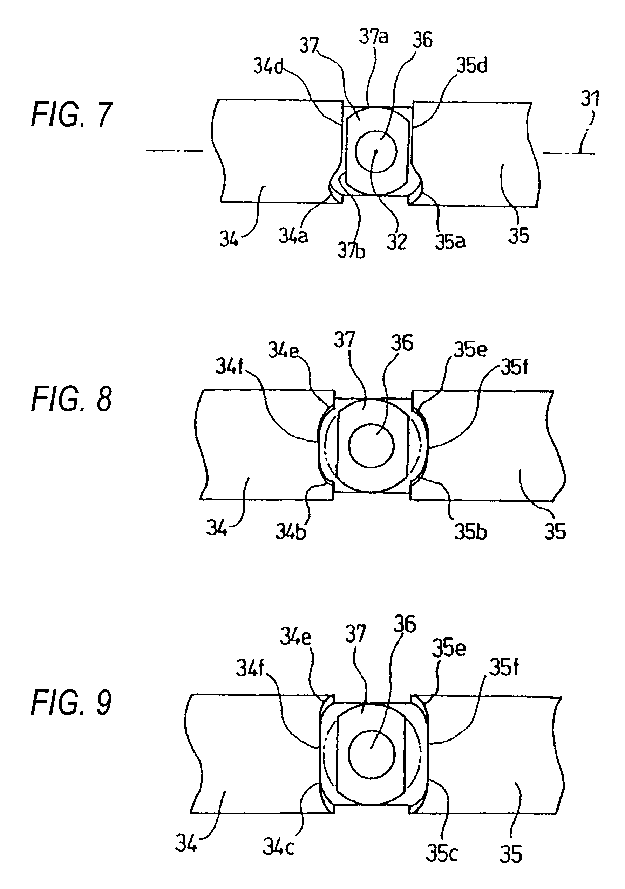

Fig. 7 is a plan view showing an enlarged main part in the second state of the rotating structure 2 according to the embodiment, illustrating the enlarged structures of the second rotating shaft portion 36, the rotation regulating plate 37, the first rotating shaft holder A 34 and the first rotating shaft holder B 35 seen in the direction of the second rotating axis 32 in the second state of the rotating structure 2 shown in Fig. 6.

In this state, the second rotating shaft portion 36 and the rotation regulating plate 37 get out of the positions of the notch portions 34a and 35a of the first rotating shaft holder A 34 and the first rotating shaft holder B 35. Parallel ends 34d and 35d of the first rotating shaft holder A 34 and the first rotating shaft holder B 35 are placed at an equal distance from the second rotating axis 32 in parallel to each other with the second rotating axis 32 to be the center of the second rotating shaft portion 36 interposed therebetween and take external shapes on parallel lines at a larger interval than the width of the chord portion 37b of the rotation regulating plate 37.

At this time, the outside diameter of the circular arc portion 37a of the rotation regulating plate 37 is larger than an interval between the parallel ends 34d and 35d of the first rotating shaft holder A 34 and the first rotating shaft holder B 35. Therefore, the external shape of the chord portion 37b of the rotation regulating plate 37 abuts on the parallel ends 34d and 35d of the first rotating shaft holder A 34 and the first rotating shaft holder B 35. For this reason, the rotation of the second rotating shaft portion 36 is regulated by the rotation regulating plate 37. Therefore, it is possible to regulate a rotation in such a manner that the first casing 10 can be prevented from being rotated by the rotation of the first casing attaching plate 39 fixed to the second rotating shaft portion 36. Accordingly, it is possible to implement the rotation preventing unit by the construction of the rotating structure 2.

Fig. 8 is a plan view showing a first variant of the rotating structure according to the embodiment. Fig. 8 shows the enlarged structures of the second rotating shaft portion 36, the rotation regulating plate 37, the first rotating shaft holder A 34 and the first rotating shaft holder B 35 seen in the direction of the second rotating axis 32 in the first state of the rotating structure 2 shown in Fig. 4.

In the first variant, notch portions 34b and 35b having notch ranges expanded are provided in the first rotating shaft holder A 34 and the first rotating shaft holder B 35. The notch portions 34b and 35b have slightly larger circular arc portions 34e and 35e than the circular arc portion 37a of the rotation regulating plate 37 and bottom portions 34f and 35f taking external shapes on the tangential lines of the arcs of the circular arc portions 34e and 35e in the same manner as in the structure of Fig. 5. The bottom portions 34f and 35f are formed rectilinearly in parallel with the parallel ends 34d and 35d to connect the circular arc portions 34e and 35e at both ends. More specifically, the notch portions 34b and 35b according to the first variant have such shapes that the notch portions 34a and 35a in Fig. 5 are extended in a rotating direction in the case in which the second rotating shaft portion 36 is rotated in the axial direction of the first rotating axis 31.

In the state in which the second rotating shaft portion 36 and the rotation regulating plate 37 are positioned within the ranges of the notch portions 34b and 35b of the first rotating shaft holder A 34 and the first rotating shaft holder B 35 as shown in Fig. 8, accordingly, the second rotating shaft portion 36 can be rotated freely without the regulation of a rotation through the rotation regulating plate 37. On the other hand, in the case in which the second rotating shaft portion 36 and the rotation regulating plate 37 get out of the ranges of the notch portions 34b and 35b, the external shape of the rotation regulating plate 37 abuts on the first rotating shaft holder A 34 and the first rotating shaft holder B 35 so that the rotation of the second rotating shaft portion 36 is regulated.

By the structure described above, the first casing 10 can be rotated around the first rotating axis 31 with respect to the second casing 20 and can be rotated around the second rotating axis 32 in an opening state within a predetermined angle range. In the case in which the predetermined angle range is exceeded, furthermore, it is possible to regulate the rotation around the second rotating axis 32. In the second variant, a range in which the first casing 10 can be rotated around the second rotating axis 32 is slightly increased as compared with the structures shown in Figs. 4 to 7.

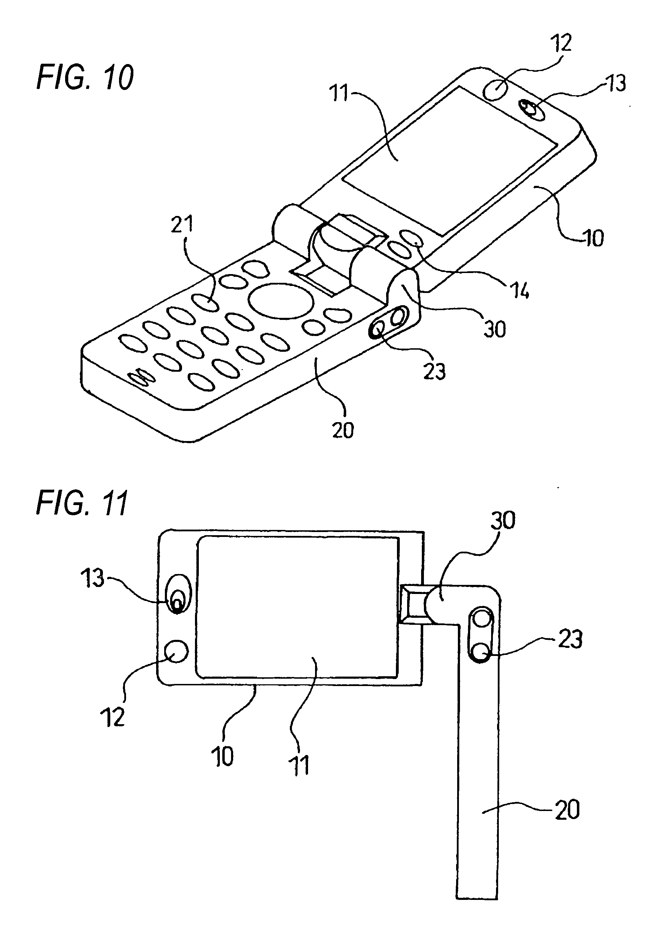

Fig. 9 is a plan view showing a second variant of the rotating structure according to the embodiment. Fig. 9 shows the enlarged structures of the second rotating shaft portion 36, the rotation regulating plate 37, the first rotating shaft holder A 34 and the first rotating shaft holder B 35 seen in the direction of the second rotating axis 32 in the first state of the rotating structure 2 shown in Fig. 4.

In the second variant, there are provided notch portions 34c and 35c having notch ranges which are further expanded than in the first variant in the first rotating shaft holder A 34 and the first rotating shaft holder B 35. The notch portions 34c and 35c have the slightly larger circular arc portions 34e and 35e than the circular arc portion 37a of the rotation regulating plate 37, and the bottom portions 34f and 35f taking external shapes on the tangential lines of the arcs of the circular arc portions 34e and 35e in the same manner as in the structure of Fig. 8, and the bottom portions 34f and 35f are formed to have greater lengths than those in Fig. 8. In the example of Fig. 9, the ranges in which the notch portions 34c and 35c are formed are set to take an almost half round of the outer peripheries of the first rotating shaft holder A 34 and the first rotating shaft holder B 35.

For this reason, in the structure according to the second variant, a range in which the first casing 10 is rotatable around the second rotating axis 32 is further enlarged as compared with the first variant shown in Fig. 8. By changing the ranges of the notch portions to be provided in the first rotating shaft holder A 34 and the first rotating shaft holder B 35, thus, it is possible to optionally set a predetermined angle range in which a rotation can be carried out around the second rotating axis 32.

In the first and second variants shown in Figs. 8 and 9, the bottom portions connecting the circular arc portions on both ends in the notch portions provided on the first rotating shaft holder A 34 and the first rotating shaft holder B 35 may be curves other than straight lines in the example shown in the drawings or may take any shape within a range in which the outer peripheral portion of the rotation regulating plate 37 does not abut thereon.

### (Second Embodiment)

Fig. 10 is a perspective view showing the external structure of a portable type electronic apparatus according to a second embodiment of the invention.

In an example according to the second embodiment, the arrangement and structure of each element is changed in the first embodiment shown in Fig. 1. A first casing 10 is provided with a first image pickup portion 12 accommodating a first image pickup element for picking up the image of a forward part in an upper part on the display surface side of a display portion 11 and a receiver 13 for outputting and receiving a call voice, and a microphone 14 for inputting and transmitting the call voice in a lower part on the display surface side of the display portion 11 in a main surface portion exposed when opening the first casing 10. A second image pickup portion operating key 23 for operating a second image pickup portion (not shown) disposed in the first casing 10 or a second casing 20 is provided in the side surface portion of the second casing 20. In the case in which the second image pickup portion is not provided, however, it is also possible to employ a structure in which the second image pickup portion operating key 23 is not provided or may be usable as the image pickup portion operating key of the first image pickup portion 12.

Fig. 11 is a plan view showing a structure obtained in the case in which the first casing 10 is rotated around a second rotating axis 32 to set an angle formed by the first casing 10 and the second casing 20 to be approximately 90 degrees in a portable type electronic apparatus according to the first embodiment illustrated in Fig. 1 or the second embodiment illustrated in Fig. 10.

A rotating structure 2 provided in a hinge portion 30 for coupling the first casing 10 to the second casing 20 is set in a state in which the external shape of a rotation regulating plate 37 does not hit against a first rotating shaft holder A 34 and a first rotating shaft holder B 35 as shown in Figs. 4 and 5. For this reason, the first casing 10 can be rotated optionally around the second rotating axis 32. For instance, as in an example shown in the drawing, in the case in which a transversely long image picked up by the first image pickup portion 12 provided on the display surface side of the display portion 11 is to be displayed on a display screen having the vertically long display portion 11 in the opening and closing operations of the first casing 10, the first casing 10 is rotated to set the angle formed by the first casing 10 and the second casing 20 to be approximately 90 degrees. By changing over the image display to be transversely long in a state in which the display screen of the display portion 11 is placed in a transversely long position, it is possible to provide an image display which can easily be seen by a user.

On the other hand, when a user gives a call through a radio communication line by using a telephone function, the first casing 10 and the second casing 20 are rotated around a first rotating axis 31 to bring an opening state beyond a predetermined angle range as shown in Fig. 1 or Fig. 10. In this state, it is possible to prevent the first casing 10 from being rotated around the second rotating axis 32 by a rotation preventing unit implemented in the rotating structure 2 provided in the hinge portion 30. Even if the user holds the second casing 20 by hand at time of a call to press the first casing 10 against his (her) ear, consequently, the casing can be held stably without shaking so that a transmission/receipt can be carried out in an excellent use condition.

### (Third Embodiment)

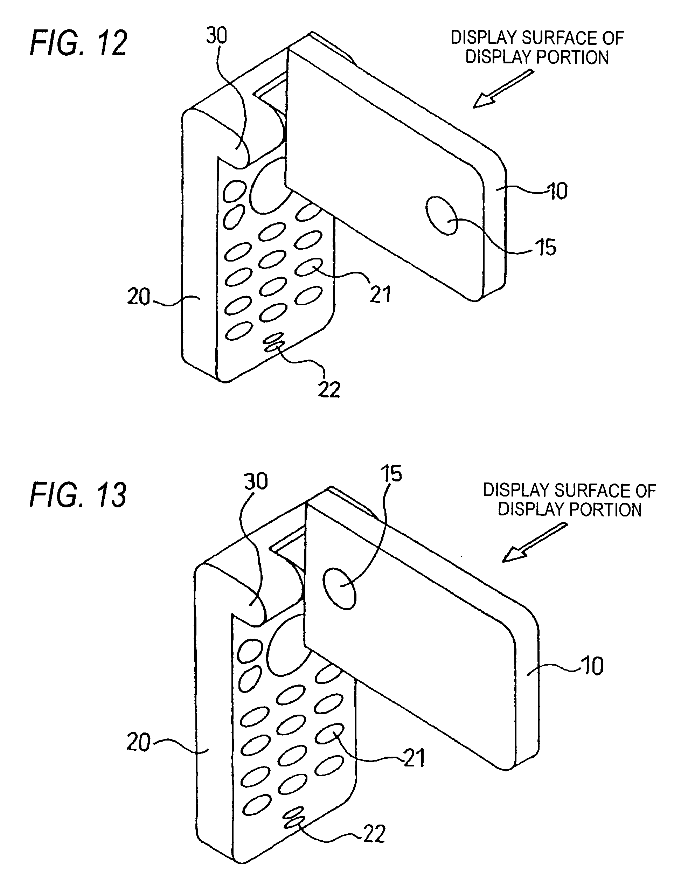

Fig. 12 is a perspective view showing the external structure of a portable type electronic apparatus according to a third embodiment of the invention. Fig. 12 shows a structure obtained in the case in which a first casing 10 is rotated around a second rotating axis 32 to set an angle formed by the first casing 10 and a second casing 20 to be approximately 90 degrees in the same manner as in Fig. 11.

The third embodiment illustrates the arrangement and structure of a second image pickup portion according to the first embodiment shown in Fig. 1. The first casing 10 is provided with a second image pickup portion 15 accommodating a second image pickup element for picking up the image of the rear part of a display portion 11 on the tip portion side of an opposite surface to the display surface (main surface part) of the display portion 11 (a rear face part on an opposite side), that is, in the vicinity of the end of the first casing 10.

### (Fourth Embodiment)

Fig. 13 is a perspective view showing the external structure of a portable type electronic apparatus according to a fourth embodiment of the invention. Fig. 13 shows a structure obtained in the case in which a first casing 10 is rotated around a second rotating axis 32 to set an angle formed by the first casing 10 and a second casing 20 to be approximately 90 degrees in the same manner as in Fig. 12.

The fourth embodiment illustrates a variant of the third embodiment shown in Fig. 12. The first casing 10 is provided with a second image pickup portion 15 accommodating a second image pickup element for picking up the image of the rear part of a display portion 11 on the base end side of an opposite surface to the display surface (main surface part) of the display portion 11 (a rear face part on an opposite side), that is, in the vicinity of a hinge portion 30.

In the third embodiment and the fourth embodiment which are constituted as described above, an image picked up by the second image pickup portion 15 can be displayed on the display portion 11. By picking up an image on the opposite side of the display portion 11 by the second image pickup portion 15, therefore, it is possible to pick up an image while confirming the photographed image by utilizing the display screen of the display portion 11 as a monitor like the finder of a camera.

If a position in which the second image pickup portion 15 is to be disposed is set in a rear face portion in an opposite direction to the main surface portion of the first casing 10 (the display surface of the display portion), for example, in the vicinity of a central part, it is possible to obtain the same functions and advantages as those in the third and fourth embodiments.

### (Fifth Embodiment)

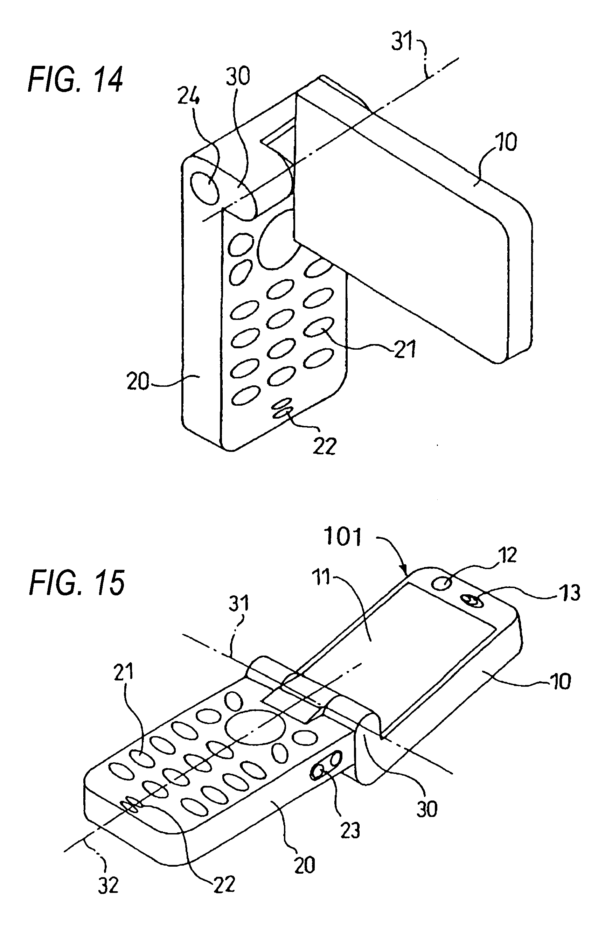

Fig. 14 is a perspective view showing the external structure of a portable type electronic apparatus according to a fifth embodiment of the invention. Fig. 14 shows a structure obtained in the case in which a first casing 10 is rotated around a second rotating axis 32 to set an angle formed by the first casing 10 and a second casing 20 to be approximately 90 degrees in the same manner as in Fig. 11.

The fifth embodiment illustrates another arrangement and structure of a second image pickup portion according to the first embodiment shown in Fig. 1. The second casing 20 is provided with a second image pickup portion 24 accommodating a second image pickup element in one of the side surface parts of a hinge portion 30 which is turned in the direction of a first rotating axis 31.

In the fifth embodiment, in the case in which the first casing 10 is rotated around the second rotating axis 32 to set the angle formed by the first casing 10 and the second casing 20 to be approximately 90 degrees as shown in Fig. 14, it is possible to pick up the image of the rear part of a display portion 11 by the second image pickup portion 24. By utilizing the display screen of the display portion 11 as a monitor like the finder of a camera, accordingly, it is possible to pick up an image while confirming a photographed image by the second image pickup portion 24.

On the other hand, in the third to fifth embodiments, when a user gives a call through a radio communication line by using a telephone function, the first casing 10 and the second casing 20 are rotated around the first rotating axis 31 to bring an opening state beyond a predetermined angle range as shown in Fig. 1. In this case, it is possible to prevent the first casing 10 from being rotated around the second rotating axis 32 by a rotation preventing unit implemented by a rotating structure 2 provided in the hinge portion 30. Even if the user holds the second casing 20 by hand at time of a call to press the first casing 10 against his (her) ear, accordingly, the casing can be held stably without shaking so that a transmission/receipt can be carried out in an excellent use condition.

### (Sixth Embodiment)

Fig. 15 is a perspective view showing the external structure of a portable type electronic apparatus according to a sixth embodiment of the invention.

The sixth embodiment illustrates an example in which the arrangement and structure of a hinge portion is changed from that in the first embodiment shown in Fig. 1. A portable type electronic apparatus 101 is constituted to include a first casing 10 having a display portion 11 and a second casing 20 having an operating portion 21, and a hinge portion 30 for coupling the first casing 10 and the second casing 20 to be opened and closed through a first rotating axis 31 and the second casing 20 to be rotatable around a second rotating axis 32.

More specifically, in the sixth embodiment, the hinge portion 30 has such a structure as to be provided on a base end at the first casing 10 side and to be coupled to the second casing 20, and the first rotating axis 31 is formed in the longitudinal direction of the hinge portion 30 and the second rotating axis 32 is formed in an orthogonal direction to the first rotating axis 31 in the central part of the second casing 20.

Also in the sixth embodiment, the same rotating structure 2 as that in the first embodiment shown in Figs. 4 to 7 is provided in the hinge portion 30. Consequently, a rotation preventing unit can be constituted. In this case, it is preferable that the first casing attaching plate 39 shown in Figs. 4 and 6 should be constituted as a second casing attaching plate and the second casing attaching plate A 40 and the second casing attaching plate B 41 should be constituted as a first casing attaching plate A and a first casing attaching plate B, respectively. By the rotation preventing unit implemented in the rotating structure 2, it is possible to prevent the second casing 20 from being rotated around the second rotating axis 32 in a state in which the first casing 10 and the second casing 20 are rotated around the first rotating axis 31 and are thus opened beyond a predetermined angle range. Even if a user holds the second casing 20 by hand in a call and presses the first casing 10 against his (her) ear, consequently, the casing can be held stably without shaking so that a transmission/receipt can be carried out in an excellent use condition.

In each of the embodiments described above, in the portable type electronic apparatus having a rotating function in a plurality of directions which includes the hinge portion 30 for coupling the first casing 10 and the second casing 20 to be opened and closed around the first rotating axis 31 and to be rotatable around the second rotating axis 32, there is provided the rotating structure 2 constituted to cause the first casing 10 or the second casing 20 to be optionally rotatable around the second rotating axis 32 in the state in which the first casing 10 and the second casing 20 are rotated around the first rotating axis 31 and are thus opened within a predetermined angle range and to prevent the first casing 10 or the second casing 20 from being rotated around the second rotating axis 32 in the state in which the first casing 10 and the second casing 20 are opened beyond the predetermined angle range. Consequently, the casing can be held stably without shaking in the state in which the two casings are opened in such a condition that one of the casings is pressed against the ear at time of a call through a telephone function. Therefore, it is possible to provide a portable type electronic apparatus capable of easily carrying out a transmission/receipt, holding an excellent use condition and enhancing a handling property in use.

### (Seventh Embodiment)

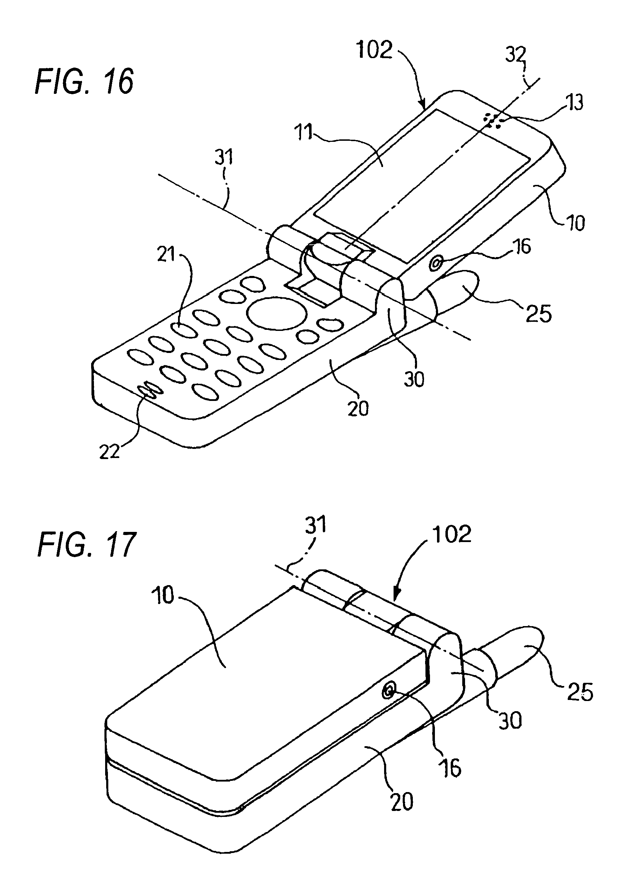

Fig. 16 is a perspective view showing the external structure of a portable terminal device according to a seventh embodiment of the invention. Fig. 16 shows a state (a second opening state) in which a first casing 10 is rotated and opened around a first rotating axis 31 in a portable terminal device 102 according to the seventh embodiment.

The portable terminal device 102 includes the first casing 10 having a display portion 11 and a second casing 20 having an operating portion 21, and includes a hinge portion 30 for coupling the first casing 10 to the second casing 20 in such a manner that the first casing 10 and the second casing 20 can be opened and closed through the first rotating axis 31 and the first casing 10 can be rotated around a second rotating axis 32 in an orthogonal direction to the first rotating axis 31.

The first casing 10 of the portable terminal device 102 is provided with the display portion 11 for carrying out various displays and a receiver 13 for outputting and receiving a call voice in a main surface portion exposed when the casing 10 is opened. Moreover, the side surface portion of the first casing 10 is provided with an external unit connector 16 for connecting an external unit such as an image pickup unit or a light emitting unit. In the second casing 20, the operating portion 21 including a plurality of operating keys and a microphone 22 for inputting and transmitting a call voice are provided in the main surface portion. Moreover, an antenna 25 for transmitting and receiving a communication signal for a radio communication is provided with a protrusion from a base end in the vicinity of the hinge portion 30 in the second casing 20. In the seventh embodiment, the hinge portion 30 has such a structure as to be provided on a base end at the second casing 20 side and to be coupled to the first casing 10, and the first rotating axis 31 is formed in the longitudinal direction of the hinge portion 30 and the second rotating axis 32 is formed in the orthogonal direction to the first rotating axis 31 in the central part of the first casing 10.

In Fig. 16, the first casing 10 and the second casing 20 are rotated and opened around the first rotating axis 31 in such a manner that the receiver 13 and the microphone 22 are turned in almost identical directions to each other. Moreover, the portable terminal device 102 has a communicating unit such as a radio communicating portion capable of executing a call function through a radio communication line and a voice signal processing portion.

In the embodiment, as shown in Fig. 16, there is provided a rotation preventing unit for preventing a rotation around the second rotating axis 32 in a state in which the first casing 10 and the second casing 20 are rotated around the first rotating axis 31 and the first casing 10 is opened beyond a predetermined angle range (for example, 120 degrees or more). The rotation preventing unit will be described below in detail. By this structure, in the case in which the first casing 10 and the second casing 20 are opened as shown in Fig. 16 when a user gives a call through the radio communication line by using a telephone function, for example, the first casing 10 is not rotated. Therefore, the antenna 25 protruded from the second casing 20 can be prevented from hitting against the first casing 10. Consequently, the antenna 25 or the first casing 10 can be prevented from being damaged so that the user can carry out a manipulation without anxiety and can perform a transmission/receipt in an excellent use condition.

Fig. 17 is a perspective view showing a state in which the casing is closed in the portable terminal device 102 according to the seventh embodiment. In this case, the first casing 10 and the second casing 20 are rotated around the first rotating axis 31 in the hinge portion 30, and the first casing 10 and the second casing 20 are opposed to each other and are closed in such a manner that the main surface portions of both of the casings face and overlap each other.

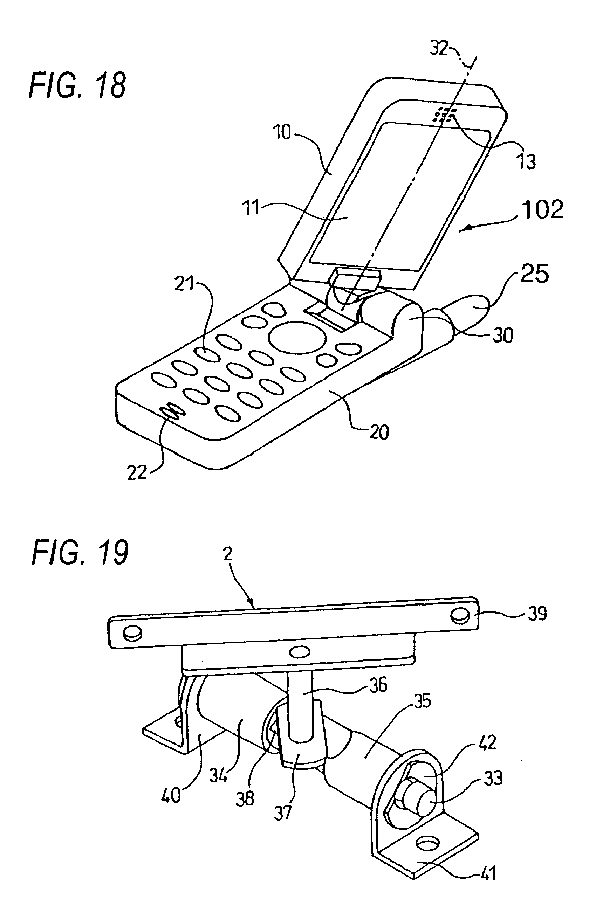

Fig. 18 is a perspective view showing a state (a first opening state) in which the first casing 10 is rotated around the second rotating axis 32 in the portable terminal device 102 according to the seventh embodiment. In this case, the first casing 10 is rotatable around the second rotating axis 32 in a state in which the first casing 10 and the second casing 20 are rotated and opened around the first rotating axis 31 within a predetermined angle range. Consequently, in the case in which the display portion 11 in a cell phone displays a transversely long image on a vertically long display screen in normal use, for example, the first casing 10 can be rotated to bring the display screen into a transversely long state. More specifically, by rotating the first casing 10 around the second rotating axis 32 to set the angle formed by the first casing 10 and the second casing 20 to be approximately 90 degrees and placing the display screen of the display portion 11 in a transversely long position to change over the image display to be transversely long, it is possible to provide a display which can easily be seen by the user.

Next, the structure of the hinge portion 30 according to the embodiment will be described in detail. Fig. 19 is a perspective view showing a state in the first state of a rotating structure 2 provided in the hinge portion 30 in the portable terminal device 102 according to the embodiment. Fig. 19 shows, as the first state of the rotating structure 2, a state in which a rotation is carried out around the second rotating axis 32 with the first casing 10 and the second casing 20 opened around the first rotating axis 31 at a predetermined angle. The rotation preventing unit is constituted in the rotating structure 2.

The rotating structure 2 has a first rotating shaft portion 33 to be the center of the rotation of the first rotating axis 31, and a first rotating shaft holder A 34 and a first rotating shaft holder B 35 which serve to hold and fix the first rotating shaft portion 33 and take cylindrical shapes. Moreover, the rotating structure 2 has a second rotating shaft portion 36 to be the center of the rotation of the second rotating axis 32, and an elliptical plate-shaped rotation regulating plate 37 coupled to the second rotating shaft portion 36. The rotation regulating plate 37 has the function of being rotated around the first rotating axis 31 together with the second rotating shaft portion 36, and furthermore, being rotated interlockingly with the second rotating shaft portion 36 and preventing the rotation of the second rotating shaft portion 36 around the second rotating axis 32 in a state in which the first casing 10 and the second casing 20 are opened beyond a predetermined angle range.

Moreover, there are provided a holding plate 38 for holding and fixing the first rotating shaft portion 33 and the second rotating shaft portion 36, a first casing attaching plate 39 for attaching and fixing the tip portion of the second rotating shaft portion 36 to the first casing 10, and a second casing attaching plate A 40 and a second casing attaching plate B 41 which serve to attach and fix both ends of the first rotating shaft portion 33 to the second casing 20 respectively. Furthermore, a first rotating shaft snap ring 42 for holding and fixing the first rotating shaft portion 33 to the second casing attaching plate A 40 and the second casing attaching plate B 41 is attached to the second casing attaching plate A 40 and the second casing attaching plate B 41, respectively.

The first rotating shaft portion 33 has both ends held and fixed to the second casing attaching plate A 40 and the second casing attaching plate B 41 in a state in which the shaft is prevented from coming off by the first rotating shaft snap ring 42. Consequently, the first rotating shaft portion 33 is rotatable around the first rotating axis 31 with respect to the second casing attaching plate A 40 and the second casing attaching plate B 41.

The rotation regulating plate 37 and the first casing attaching plate 39 are fixed by caulking so that the base end of the second rotating shaft portion 36 is held and fixed rotatably with respect to the first rotating shaft portion 33 through the holding plate 38. Consequently, the second rotating shaft portion 36 is rotated around the first rotating axis 31, and furthermore, is rotatable around the second rotating axis 32.

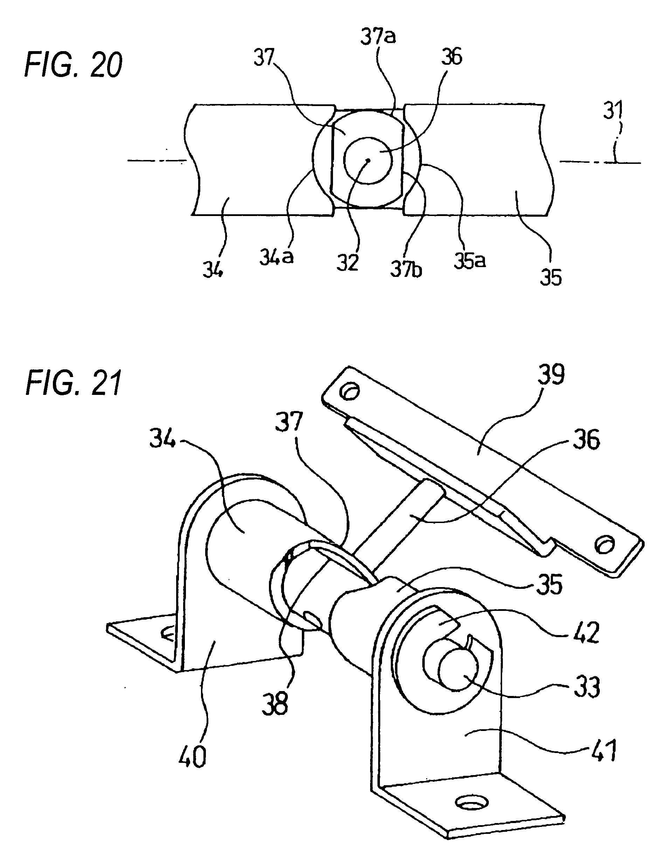

Fig. 20 is a plan view showing an enlarged main part in the first state of the rotating structure 2 according to the embodiment, illustrating the enlarged structures of the second rotating shaft portion 36, the rotation regulating plate 37, the first rotating shaft holder A 34 and the first rotating shaft holder B 35 seen in the direction of the second rotating axis 32 in the first state of the rotating structure 2 shown in Fig. 19.

The rotation regulating plate 37 has a circular arc portion 37a taking an external shape on a circumference to be a concentric circle with the second rotating shaft portion 36 and chord portions 37b provided at an equal distance from the second rotating axis 32 in parallel to each other with the second rotating axis 32 to be the center of the second rotating shaft portion 36 interposed therebetween, and is constituted by an elliptical plate member obtained by cutting a disc out in a parallel line.

The first rotating shaft holder A 34 and the first rotating shaft holder B 35 are provided opposite to each other at a predetermined interval with the second rotating shaft portion 36 interposed therebetween in such a manner that the second rotating shaft portion 36 is rotatable around the first rotating axis 31. Arcuate notch portions 34a and 35a are formed on ends at the second rotating shaft portion 36 side in the first rotating shaft holder A 34 and the first rotating shaft holder B 35. The notch portions 34a and 35a take external shapes on a slightly larger circumference than the circular arc portion 37a of the rotation regulating plate 37 when they are concentric with the second rotating shaft portion 36.

The rotation regulating plate 37 is fixed to the second rotating shaft portion 36. When the second rotating shaft portion 36 is rotated so that the first casing 10 is rotated around the second rotating axis 32, therefore, the rotation regulating plate 37 is rotated together with the second rotating shaft portion 36 interlockingly with the rotation. At this time, the notch portions 34a and 35a of the first rotating shaft holder A 34 and the first rotating shaft holder B 35 are larger than the circular arc portion 37a of the rotation regulating plate 37. For this reason, the rotation regulating plate 37 can be prevented from hitting against the first rotating shaft holder A 34 and the first rotating shaft holder B 35 to regulate the rotation in the state shown in Fig. 20. In this case, accordingly, the second rotating shaft portion 36 can be rotated freely, and the first casing attaching plate 39 is rotated so that the first casing 10 can be rotated around the second rotating axis 32.

Fig. 21 is a perspective view showing a structure in the second state of the rotating structure 2 according to the embodiment. Fig. 21 shows, as the second state of the rotating structure 2, a state in which a rotation around the second rotating axis 32 is regulated in such a condition that the first casing 10 and the second casing 20 in the portable terminal device 102 are opened around the first rotating axis 31 beyond a predetermined angle range as shown in Fig. 16. In this case, the second rotating shaft portion 36 is further rotated around the first rotating axis 31 in the state shown in Fig. 19 and is inclined with respect to the second casing attaching plate A 40 and the second casing attaching plate B 41.

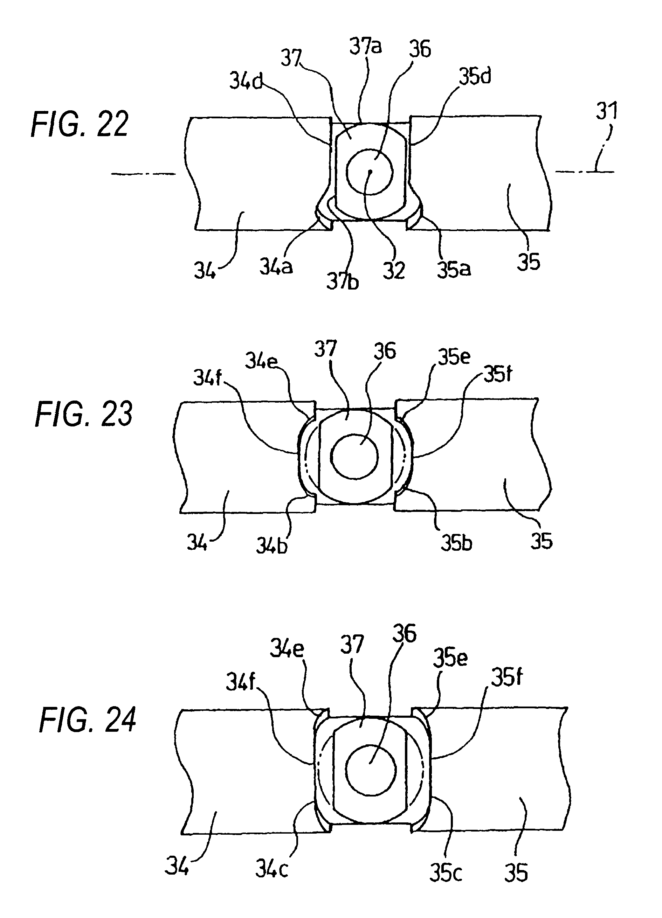

Fig. 22 is a plan view showing an enlarged main part in the second state of the rotating structure 2 according to the embodiment, illustrating the enlarged structures of the second rotating shaft portion 36, the rotation regulating plate 37, the first rotating shaft holder A 34 and the first rotating shaft holder B 35 seen in the direction of the second rotating axis 32 in the second state of the rotating structure 2 shown in Fig. 21.

In this state, the second rotating shaft portion 36 and the rotation regulating plate 37 get out of the positions of the notch portions 34a and 35a of the first rotating shaft holder A 34 and the first rotating shaft holder B 35. Parallel ends 34d and 35d of the first rotating shaft holder A 34 and the first rotating shaft holder B 35 are placed at an equal distance from the second rotating axis 32 in parallel to each other with the second rotating axis 32 to be the center of the second rotating shaft portion 36 interposed therebetween and take external shapes on parallel lines at a larger interval than the width of the chord portion 37b of the rotation regulating plate 37.

At this time, the outside diameter of the circular arc portion 37a of the rotation regulating plate 37 is larger than an interval between the parallel ends 34d and 35d of the first rotating shaft holder A 34 and the first rotating shaft holder B 35. Therefore, the external shape of the chord portion 37b of the rotation regulating plate 37 abuts on the parallel ends 34d and 35d of the first rotating shaft holder A 34 and the first rotating shaft holder B 35. For this reason, the rotation of the second rotating shaft portion 36 is regulated by the rotation regulating plate 37. Therefore, it is possible to regulate a rotation in such a manner that the first casing 10 can be prevented from being rotated by the rotation of the first casing attaching plate 39 fixed to the second rotating shaft portion 36. Accordingly, it is possible to implement the rotation preventing unit by the construction of the rotating structure 2.

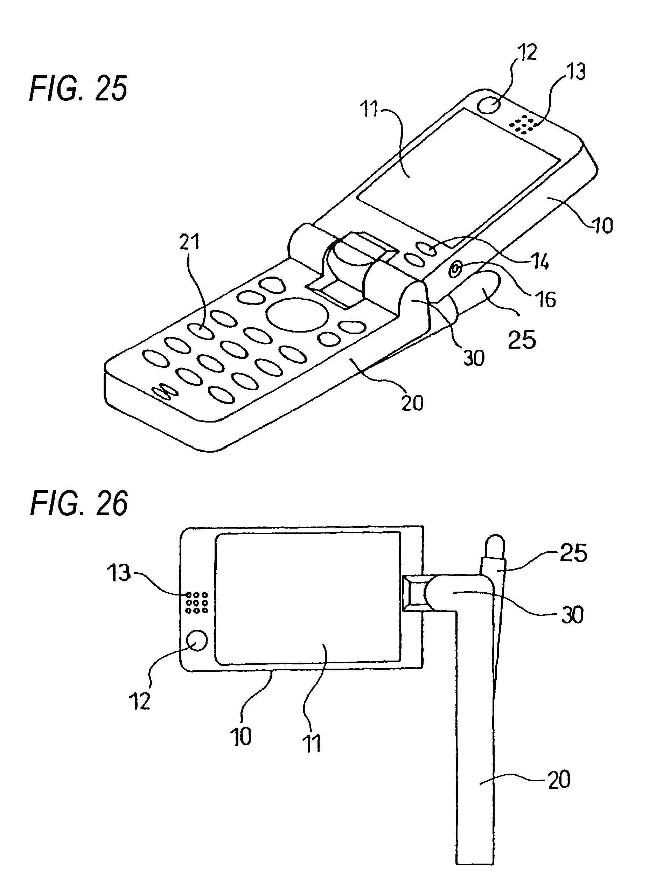

Fig. 23 is a plan view showing a first variant of the rotating structure according to the embodiment. Fig. 23 shows the enlarged structures of the second rotating shaft portion 36, the rotation regulating plate 37, the first rotating shaft holder A 34 and the first rotating shaft holder B 35 seen in the direction of the second rotating axis 32 in the first state of the rotating structure 2 shown in Fig. 19.

In the first variant, notch portions 34b and 35b having notch ranges expanded are provided in the first rotating shaft holder A 34 and the first rotating shaft holder B 35. The notch portions 34b and 35b have slightly larger circular arc portions 34e and 35e than the circular arc portion 37a of the rotation regulating plate 37 and bottom portions 34f and 35f taking external shapes on the tangential lines of the arcs of the circular arc portions 34e and 35e in the same manner as in the structure of Fig. 20. The bottom portions 34f and 35f are formed rectilinearly in parallel with the parallel ends 34d and 35d to connect the circular arc portions 34e and 35e at both ends. More specifically, the notch portions 34b and 35b according to the first variant have such shapes that the notch portions 34a and 35a in Fig. 20 are extended in a rotating direction in the case in which the second rotating shaft portion 36 is rotated in the axial direction of the first rotating axis 31.

In the state in which the second rotating shaft portion 36 and the rotation regulating plate 37 are positioned within the ranges of the notch portions 34b and 35b of the first rotating shaft holder A 34 and the first rotating shaft holder B 35 as shown in Fig. 23, accordingly, the second rotating shaft portion 36 can be rotated freely without the regulation of a rotation through the rotation regulating plate 37. On the other hand, in the case in which the second rotating shaft portion 36 and the rotation regulating plate 37 get out of the ranges of the notch portions 34b and 35b, the external shape of the rotation regulating plate 37 abuts on the first rotating shaft holder A 34 and the first rotating shaft holder B 35 so that the rotation of the second rotating shaft portion 36 is regulated.

By the structure described above, the first casing 10 can be rotated around the first rotating axis 31 with respect to the second casing 20 and can be rotated around the second rotating axis 32 in an opening state within a predetermined angle range. In the case in which the predetermined angle range is exceeded, furthermore, it is possible to regulate the rotation around the second rotating axis 32. In the second variant, a range in which the first casing 10 can be rotated around the second rotating axis 32 is slightly increased as compared with the structures shown in Figs. 19 to 22.

Fig. 24 is a plan view showing a second variant of the rotating structure according to the embodiment. Fig. 24 shows the enlarged structures of the second rotating shaft portion 36, the rotation regulating plate 37, the first rotating shaft holder A 34 and the first rotating shaft holder B 35 seen in the direction of the second rotating axis 32 in the first state of the rotating structure 2 shown in Fig. 19.

In the second variant, there are provided notch portions 34c and 35c having notch ranges further expanded than those in the first variant in the first rotating shaft holder A 34 and the first rotating shaft holder B 35. The notch portions 34c and 35c have the slightly larger circular arc portions 34e and 35e than the circular arc portion 37a of the rotation regulating plate 37, and the bottom portions 34f and 35f taking external shapes on the tangential lines of the arcs of the circular arc portions 34e and 35e in the same manner as in the structure of Fig. 23, and the bottom portions 34f and 35f are formed to have greater lengths than those in Fig. 23. In the example of Fig. 24, the ranges in which the notch portions 34c and 35c are formed are set to take an almost half round of the outer peripheries of the first rotating shaft holder A 34 and the first rotating shaft holder B 35.

For this reason, in the structure according to the second variant, a range in which the first casing 10 is rotatable around the second rotating axis 32 is further enlarged as compared with the first variant shown in Fig. 23. By changing the ranges of the notch portions to be provided in the first rotating shaft holder A 34 and the first rotating shaft holder B 35, thus, it is possible to optionally set a predetermined angle range in which a rotation can be carried out around the second rotating axis 32.

In the first and second variants shown in Figs. 23 and 24, the bottom portions connecting the circular arc portions on both ends in the notch portions provided on the first rotating shaft holder A 34 and the first rotating shaft holder B 35 may be curves other than straight lines in the example shown in the drawings or may take any shape within a range in which the outer peripheral portion of the rotation regulating plate 37 does not abut thereon.

### (Eighth Embodiment)

Fig. 25 is a perspective view showing the external structure of a portable terminal device according to an eighth embodiment of the invention.

In an example according to the eighth embodiment, the arrangement and structure of each element is changed in the seventh embodiment shown in Fig. 16. A first casing 10 is provided with a first image pickup portion 12 accommodating a first image pickup element for picking up the image of a forward part in an upper part on the display surface side of a display portion 11 and a receiver 13 for outputting and receiving a call voice, and a microphone 14 for inputting and transmitting the call voice in a lower part on the display surface side of the display portion 11 in a main surface portion exposed when opening the first casing 10.

Fig. 26 is a plan view showing a structure obtained in the case in which the first casing 10 is rotated around a second rotating axis 32 to set an angle formed by the first casing 10 and a second casing 20 to be approximately 90 degrees in the variant of a portable type electronic apparatus according to the variant of the portable terminal device according to the seventh embodiment illustrated in Fig. 16. Fig. 26 shows a variant in which the first image pickup portion 12 is provided on the display surface side of the display portion 11 in the first casing 10 in the structure of Fig. 16.

A rotating structure 2 provided in a hinge portion 30 for coupling the first casing 10 to the second casing 20 is set in a state in which the external shape of a rotation regulating plate 37 does not hit against a first rotating shaft holder A 34 and a first rotating shaft holder B 35 as shown in Figs. 19 and 20. For this reason, the first casing 10 can be rotated optionally around the second rotating axis 32. For instance, as in an example shown in the drawing, in the case in which a transversely long image picked up by the first image pickup portion 12 provided on the display surface side of the display portion 11 is to be displayed on a display screen having the vertically long display portion 11 in the opening and closing operations of the first casing 10, the first casing 10 is rotated to set the angle formed by the first casing 10 and the second casing 20 to be approximately 90 degrees. By changing over the image display to be transversely long in a state in which the display screen of the display portion 11 is placed in a transversely long position, it is possible to provide an image display which can easily be seen by a user.

On the other hand, when the user gives a call through a radio communication line by using a telephone function, the first casing 10 and the second casing 20 are rotated around a first rotating axis 31 to bring an opening state beyond a predetermined angle range as shown in Fig. 16 or Fig. 25. In this state, it is possible to prevent the first casing 10 from being rotated around the second rotating axis 32 by a rotation preventing unit implemented in the rotating structure 2 provided in the hinge portion 30. Consequently, the first casing 10 can be prevented from hitting against an antenna 25 for a communication which is protruded from the second casing 20. Therefore, the antenna 25 or the first casing 10 can be prevented from being damaged so that the user can carry out a manipulation without anxiety and can perform a transmission/receipt in an excellent use condition.

### (Ninth Embodiment)

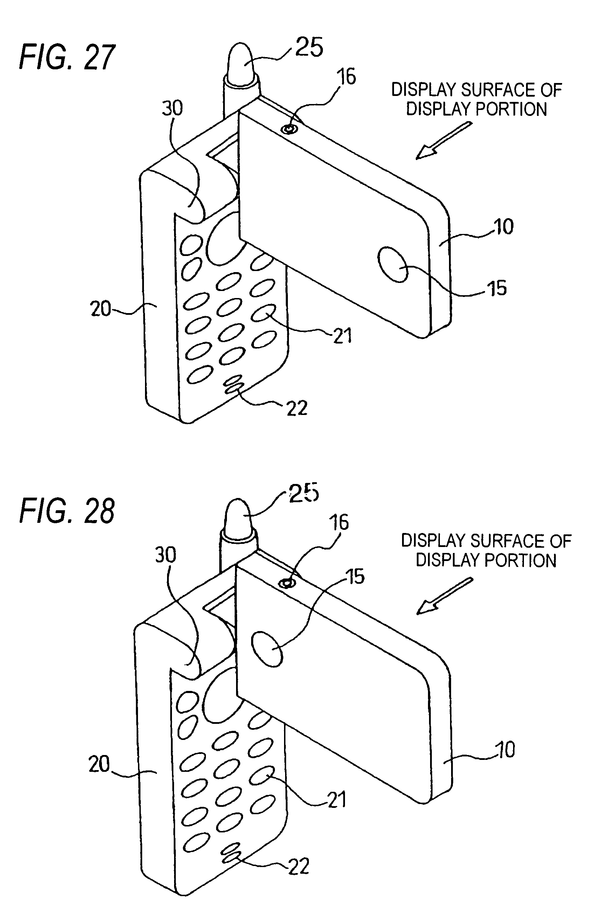

Fig. 27 is a perspective view showing the external structure of a portable terminal device according to a ninth embodiment of the invention. Fig. 27 shows a structure obtained in the case in which a first casing 10 is rotated around a second rotating axis 32 to set an angle formed by the first casing 10 and a second casing 20 to be approximately 90 degrees in the same manner as in Fig. 26.

The ninth embodiment illustrates an arrangement and structure obtained in the case in which a second image pickup portion is provided in addition to the structure in which the first image pickup portion is provided in Fig. 26. The first casing 10 is provided with a second image pickup portion 15 accommodating a second image pickup element for picking up the image of the rear part of a display portion 11 on the tip portion side of an opposite surface to the display surface (main surface part) of the display portion 11 (a rear face part on an opposite side), that is, in the vicinity of the end of the first casing 10.

### (Tenth Embodiment)

Fig. 28 is a perspective view showing the external structure of a portable terminal device according to a tenth embodiment of the invention. Fig. 28 shows a structure obtained in the case in which a first casing 10 is rotated around a second rotating axis 32 to set an angle formed by the first casing 10 and a second casing 20 to be approximately 90 degrees in the same manner as in Fig. 27.

The tenth embodiment illustrates a variant of the ninth embodiment shown in Fig. 27. The first casing 10 is provided with a second image pickup portion 15 accommodating a second image pickup element for picking up the image of the rear part of a display portion 11 on the base end side of an opposite surface to the display surface (main surface part) of the display portion 11 (a rear face part on an opposite side), that is, in the vicinity of a hinge portion 30.

In the ninth embodiment and the tenth embodiment which are constituted as described above, an image picked up by the second image pickup portion 15 can be displayed on the display portion 11. By picking up an image on the opposite side of the display portion 11 by the second image pickup portion 15, therefore, it is possible to pick up an image while confirming the photographed image by utilizing the display screen of the display portion 11 like the finder of a camera.

If a position in which the second image pickup portion 15 is to be disposed is set in a rear face portion in an opposite direction to the main surface portion of the first casing 10 (the display surface of the display portion), for example, in the vicinity of a central part, it is possible to obtain the same functions and advantages as those in the ninth and tenth embodiments.

### (Eleventh Embodiment)

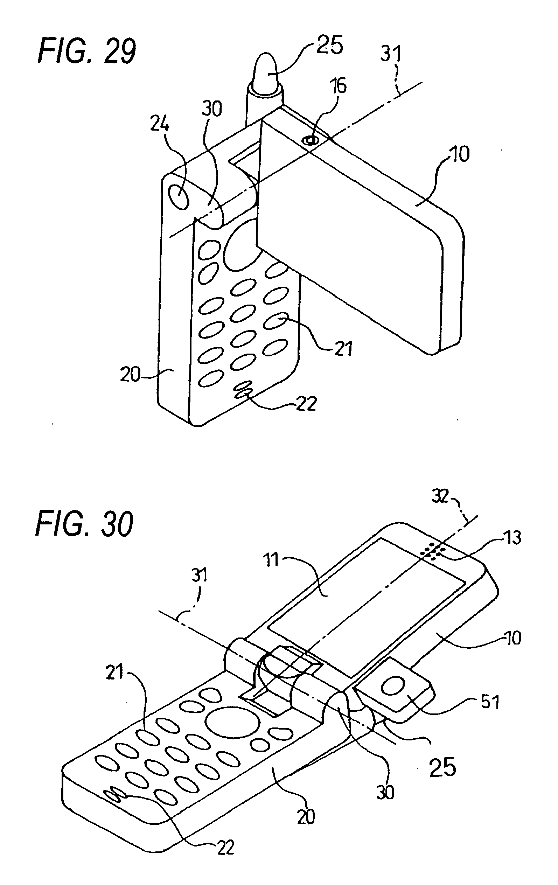

Fig. 29 is a perspective view showing the external structure of a portable terminal device according to an eleventh embodiment of the invention. Fig. 29 shows a structure obtained in the case in which a first casing 10 is rotated around a second rotating axis 32 to set an angle formed by the first casing 10 and a second casing 20 to be approximately 90 degrees in the same manner as in Fig. 26.

The eleventh embodiment illustrates another arrangement and structure obtained in the case in which a second image pickup portion is provided in addition to the structure in which the first image pickup portion is provided in Fig. 26. The second casing 20 is provided with a second image pickup portion 24 accommodating a second image pickup element in one of the side surface parts of a hinge portion 30 which is turned in the direction of a first rotating axis 31.

In the eleventh embodiment, in the case in which the first casing 10 is rotated around the second rotating axis 32 to set the angle formed by the first casing 10 and the second casing 20 to be approximately 90 degrees as shown in Fig. 29, it is possible to pick up the image of the rear part of a display portion 11 by the second image pickup portion 24. By utilizing the display screen of the display portion 11 like the finder of a camera, accordingly, it is possible to pick up an image while confirming a photographed image by the second image pickup portion 24.

On the other hand, in the ninth to eleventh embodiments, when a user gives a call through a radio communication line by using a telephone function, the first casing 10 and the second casing 20 are rotated around the first rotating axis 31 to bring an opening state beyond a predetermined angle range as shown in Fig. 16. In this case, it is possible to prevent the first casing 10 from being rotated around the second rotating axis 32 by a rotation preventing unit implemented by a rotating structure 2 provided in the hinge portion 30. Accordingly, the first casing 10 can be prevented from hitting against an antenna 25 protruded from the second casing 20. Therefore, the antenna 25 or the first casing 10 can be prevented from being damaged so that the user can carry out a manipulation without anxiety and can perform a transmission/receipt in an excellent use condition.

### (Twelfth Embodiment)

Fig. 30 is a perspective view showing the external structure of a portable terminal device according to a twelfth embodiment of the invention. The twelfth embodiment illustrates a state in which an image pickup unit 51 accommodating an image pickup element is removably connected through an external unit connector 16 to the portable terminal device having no image pickup portion shown in Fig. 16.

The image pickup unit 51 is attached to the external unit connector 16 provided in the vicinity of a hinge portion 30 in the side surface portion of a first casing 10 in such a state as to be protruded from the first casing 10. Also in the twelfth embodiment, it is possible to prevent the first casing 10 from being rotated around a second rotating axis 32 by a rotation preventing unit implemented by a rotating structure 2 provided in the hinge portion 30 in a state in which the first casing 10 and a second casing 20 are rotated around a first rotating axis 31 and are thus opened beyond a predetermined angle range. Consequently, the first casing 10 or the image pickup unit 51 can be prevented from hitting against an antenna 25 for a communication which is protruded from the second casing 20. Therefore, the antenna 25, the first casing 10 or the image pickup unit 51 can be prevented from being damaged so that a user can carry out a manipulation without anxiety and can perform a transmission/receipt in an excellent use condition.

### (Thirteenth Embodiment)

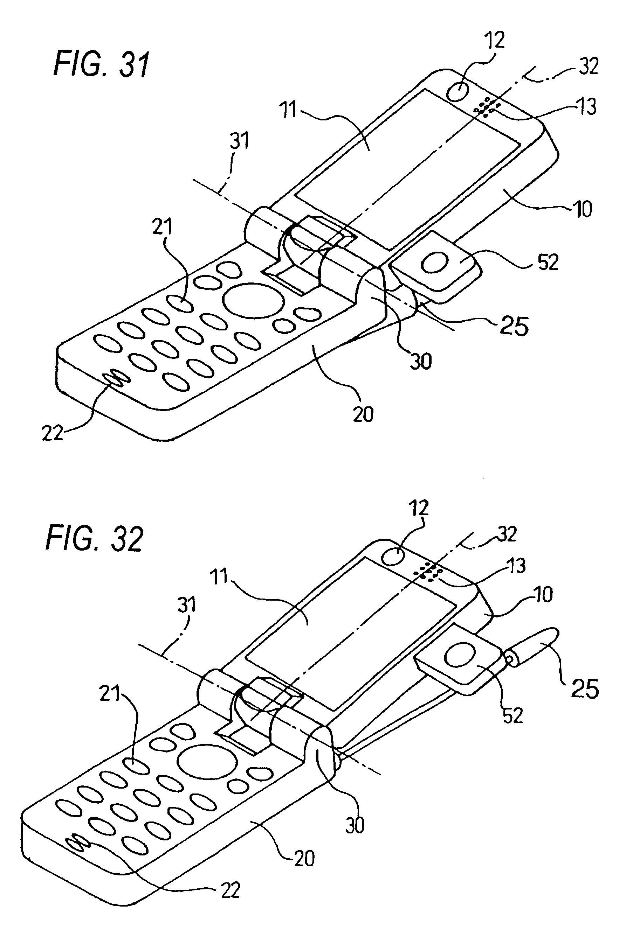

Fig. 31 is a perspective view showing the external structure of a portable terminal device according to a thirteenth embodiment of the invention. The thirteenth embodiment illustrates a state in which a light emitting unit 52 accommodating a light emitting element and having the same light emitting function as that of the stroboscope of a camera is removably connected through an external unit connector 16 to the portable terminal device having the first image pickup portion shown in Fig. 26.

The light emitting unit 52 is attached to the external unit connector 16 provided in the vicinity of a hinge portion 30 in the side surface portion of a first casing 10 in such a state as to be protruded from the first casing 10. Also in the thirteenth embodiment, it is possible to prevent the first casing 10 from being rotated around a second rotating axis 32 by a rotation preventing unit implemented by a rotating structure 2 provided in the hinge portion 30 in a state in which the first casing 10 and a second casing 20 are rotated around a first rotating axis 31 and are thus opened beyond a predetermined angle range. Consequently, the first casing 10 or the light emitting unit 52 can be prevented from hitting against an antenna 25 for a communication which is protruded from the second casing 20. Therefore, the antenna 25, the first casing 10 or the light emitting unit 52 can be prevented from being damaged so that a user can carry out a manipulation without anxiety and can perform a transmission/receipt in an excellent use condition.

### (Fourteenth Embodiment)

Fig. 32 is a perspective view showing the external structure of a portable terminal device according to a fourteenth embodiment of the invention. The fourteenth embodiment illustrates a variant of the thirteenth embodiment shown in Fig. 31. An external unit connector 16 is provided in the tip part of the side surface portion of a first casing 10 and a light emitting unit 52 is connected to the external unit connector 16 in such a state as to be protruded from the first casing 10.

Also in the fourteenth embodiment, it is possible to prevent the first casing 10 from being rotated around a second rotating axis 32 by a rotation preventing unit implemented by a rotating structure 2 provided in a hinge portion 30 in a state in which the first casing 10 and a second casing 20 are rotated around a first rotating axis 31 and are thus opened beyond a predetermined angle range. Also in a state in which an antenna 25 for carrying out a radio communication expands or contracts and expands outward from the second casing 20 in the direction of the first casing 10 as in the structure of Fig. 32, accordingly, the first casing 10 or the light emitting unit 52 can be prevented from hitting against the antenna 25 for a communication which is protruded from the second casing 20. Therefore, the antenna 25, the first casing 10 or the light emitting unit 52 can be prevented from being damaged so that a user can carry out a manipulation without anxiety and can perform a transmission/receipt in an excellent use condition.

In each of the embodiments described above, in the portable terminal device having a rotating function in a plurality of directions which includes the hinge portion 30 for coupling the first casing 10 and the second casing 20 to be opened and closed around the first rotating axis 31 and to be rotatable around the second rotating axis 32, there is provided the rotating structure 2 constituted to cause the first casing 10 or the second casing 20 to be optionally rotatable around the second rotating axis 32 in the state in which the first casing 10 and the second casing 20 are rotated around the first rotating axis 31 and are thus opened within a predetermined angle range and to prevent the first casing 10 or the second casing 20 from being rotated around the second rotating axis 32 in the state in which the first casing 10 and the second casing 20 are opened beyond the predetermined angle range. Also in the case in which the antenna for a radio communication is provided with a protrusion from the casing, consequently, the antenna can be prevented from hitting against the casing so that the antenna or the casing can be prevented from being damaged. Also in the case in which the image pickup unit or the light emitting unit is attached as the external unit, moreover, it can be prevented from hitting against the antenna, causing a damage. Accordingly, it is possible to eliminate a possibility that the apparatus might be damaged by the rotation of the casing and to carry out a manipulation without anxiety. Thus, it is possible to provide a portable terminal device capable of maintaining an excellent use condition and enhancing a handling property in use.

While the invention has been described in detail with reference to the specific embodiments, it is apparent to the skilled in the art that various changes and modifications can be made without departing from the spirit and scope of the invention.

The application is based on Japanese Patent Application No. 2002-300686 filed on October 15, 2002 and Japanese Patent Application No. 2002-300687 filed on October 15, 2002, and contents thereof are incorporated herein by reference.

### <Industrial Applicability>

As described above, according to the invention, it is possible to provide a portable type electronic apparatus comprising a hinge portion having a rotating function in a plurality of directions, wherein in the case in which one of two casings is pressed against an ear at time of a call through a telephone function, the casings can be held stably without shaking in an opening state and a handling property in use can be thus enhanced.

According to the invention, moreover, it is possible to provide a portable terminal device comprising a hinge portion having a rotating function in a plurality of directions, wherein in the case in which there is a member to be provided or attached with a protrusion toward the outside of a casing, for example, an antenna for a radio communicating function or an image pickup unit or a light emitting unit for a camera function, the member and the casing can be prevented from being damaged by the rotation of the casing so that a user can carry out a manipulation without anxiety and a handling property in use can be enhanced.

## Claims

1. A portable type electronic apparatus, comprising:
a first casing having a display portion;
a second casing having an operating portion; and
a hinge portion rotatably coupling the first casing to the second casing,
wherein the hinge portion includes a rotation preventing unit which has a first rotating axis to be an axis in a rotation from a state that the first casing and the second casing are opened to a state that the first casing and the second casing are closed so as to be opposed to each other, and a second rotating axis to be an axis in a rotation of either the first casing or the second casing in an orthogonal direction to a rotating direction of the first rotating axis in a state that the first casing and the second casing are opened within a predetermined angle range around the first rotating axis; and
wherein the rotation preventing unit prevents a rotation of the first casing or the second casing around the second rotating axis in a state that the first casing and the second casing are opened beyond the predetermined angle range.

2. The portable type electronic apparatus as set forth in claim 1, further comprising a call unit for performing a call function through a radio communication line,
wherein a receiver for outputting and receiving a call voice from the call unit is provided in the first casing;
wherein a microphone for inputting and transmitting the call voice to the call unit is provided in the second casing or the first casing; and
wherein the call unit performs the function when the first casing and the second casing are opened so that both the receiver and the microphone face in substantially identical directions.

3. The portable type electronic apparatus as set forth in claim 1 or 2,
wherein a first image pickup portion accommodating a first image pickup element is provided on a display surface side of a display portion of the first casing; and
wherein the display portion has a function of displaying an image picked up by the first image pickup portion.

4. The portable type electronic apparatus as set forth in claim 3, wherein a second image pickup portion accommodating a second image pickup element is provided in the first casing so as to face in an opposite direction to the first image pickup portion; and
wherein the display portion has a function of displaying images picked up by the first image pickup portion and the second image pickup portion.

5. The portable type electronic apparatus as set forth in claim 3, wherein a second image pickup portion accommodating a second image pickup element is provided in the hinge portion so as to face in a direction of the first rotating axis; and
wherein the display portion has a function of displaying images picked up by the first image pickup portion and the second image pickup portion.
